# EUROPÄISCHE PATENTSCHRIFT

(11) **EP 2 937 753 B1**
(45) Veröffentlichungstag und Bekanntmachung des Hinweises auf die Patenterteilung: **31.07.2019**
(21) Anmeldenummer: 14165853.4
(22) Anmeldetag: 24.04.2014
(51) Int. Cl.: G05B 19/401, B23Q 17/20, G06T 7/00, B25J 9/16

(54) **Verfahren zum Vermessen von Werkstücken und nach dem Verfahren arbeitende Produktions- und/oder Werkzeugmaschine**
Method for measuring workpieces and production and/or machine tool operating according to this method
Procédé de mesure d'outils et machine-outil et/ou de production fonctionnant selon le procédé

(43) Veröffentlichungstag der Anmeldung: 28.10.2015
(73) Patentinhaber: Siemens Aktiengesellschaft, 80333 München (DE)
(72) Erfinder: Bretschneider, Jochen, 73732 Esslingen (DE)

(56) Entgegenhaltungen:
- EP-A1- 1 916 046
- DE-A1-102007 033 309
- DE-A1-102010 020 330
- DE-A1-102013 000 743
- JP-A- 2013 109 416
- US-A- 4 675 502
- US-A1- 2012 170 853

## Beschreibung

Die Erfindung betrifft ein Verfahren zum automatischen Vermessen von Werkstücken in einem Arbeitsraum einer Produktions- und/oder Werkzeugmaschine sowie eine nach dem Verfahren arbeitende Produktions- und/oder Werkzeugmaschine.

Verfahren zum automatischen Vermessen von Werkstücken in einem Arbeitsraum einer Produktions- und/oder Werkzeugmaschine sind bekannt. Eine steuerungs-/ maschinenintegrierte Vermessung von Werkstücken in der Werkzeugmaschine wird heute anhand von schaltenden oder analogen Messtastern/ -fühlern oder zum Teil auch mithilfe spezieller Kamerasysteme (CCD-Kamera, Lichtschnittsensoren, Streifenprojektion, usw.) durchgeführt.

Während integrierte Messtastersysteme zum Vermessen von Werkstücken in einer Werkzeugmaschine gut eingeführt sind, ist die Verbreitung von Kamerasystemen eher schwach. Ein Grundproblem ist dabei die aufwändige und rechenzeitintensive Bildverarbeitung, die zeitlich nach der Bildaufnahme erfolgt und zu einem nicht unerheblichen Zeitverzug zwischen Bildaufnahme und Ergebnispräsentation führt. Notwendig ist die Bildverarbeitung zur Erkennung von Objekten oder von Werkstücckanten im Arbeitsraum der Werkzeugmaschine. Die Erkennung des Objekts erfolgt dabei durch Vergleich mit vorher definierten Objekten oder Kanten. Muster neuer Werkstücke sind dabei über Projektierungsmaßnahmen in der Bildverarbeitungssoftware zu integrieren, was den Einsatz des Gesamtsystems unflexibel macht. In jedem Fall ist eine nicht unerhebliche Rechenleistung erforderlich, welche stets unerwünschte Zusatzkosten erzeugt.
Aus der EP 1 916 046 A1 ein Verfahren zum maschinellen Schneiden eines plattenförmigen Werkstücks bekannt, bei dem die Lage und/oder Geometrie und/oder Abmessungen des Werkstücks berührungslos mittels einer Kamera erfasst und die entsprechenden Daten einer Auswertung mittels Bildverarbeitung zugeführt werden. Um hiervon ausgehend bei geringem Zeitaufwand eine präzise und reproduzierbare Erkennung der Lage, und/oder Geometrie und/oder von Abmessungen des zu bearbeitenden Werkstücks zu ermöglichen, wird erfindungsgemäß vorgeschlagen, dass das Erfassen der Daten einen Verfahrensschritt zur groben Lokalisierung einer Werkstückkante umfasst, bei dem die Kamera in einem ersten Betriebsmodus mit geringerer optischer Auflösung betrieben wird, und einen zweiten Verfahrensschritt zur Ermittlung der genauen Positionsdaten der aufgefundenen Werkstückkante, bei dem die Kamera in einem zweiten Betriebsmodus mit höherer optischer Auflösung betrieben wird.

Die DE 10 2007 033 309 A1 betrifft ein Verfahren zum Bearbeiten einer Kontur an wenigstens einem Werkstück, insbesondere zum Schweißen oder Abdichten einer Naht zwischen zwei Werkstücken, insbesondere zwischen zwei Karosserieteilen, mittels eines Roboters, gekennzeichnet durch folgende Verfahrensschritte: Positionieren des zu bearbeitenden Werkstückes zum Roboter und/oder Erfassen der tatsächlichen Lage des Werkstückes, Erfassen des realen Verlaufes der Kontur am Werkstück an den vorbestimmten oder anderen Punkten mittels wenigstens eines Sensors, Ansteuerung des Roboters entsprechend den Einzelvektoren zur Korrektur der Bewegung des Roboters beim Bearbeiten der Kontur.

In der DE 10 2013 000 743 A1 wird eine Vorrichtung für eine geführte Applikation entlang einer Applikationsbahn auf einem Gegenstand, vorzugsweise einer Fahrzeugkarosserie, mit einem in Bezug auf mindestens zwei Achsen beweglich geführten Applikator und mindestens einem gemeinsam mit dem Applikator entlang der Applikationsbahn verlagerbaren Sensor zur Erfassung von Daten im Bereich der Applikationsbahn vorgeschlagen. Die Vorrichtung zeichnet sich dadurch aus, dass zwei Sensoren zugleich mit dem Applikator aktivierbar sind, wobei der aktivierte Applikator gemeinsam mit den aktivierten Sensoren entlang der Applikationsbahn verlagerbar ist, und dass ein erster Sensor - in Bezug auf die Applikationsbahn - dem Applikator voreilend vorgesehen ist, wobei der Applikator während der Applikation auf Grundlage der ebenfalls während der Applikation durch den ersten Sensor erfassten Daten entlang der Applikationsbahn führbar ist, und dass ein zweiter Sensor - in Bezug auf die Applikationsbahn - dem Applikator nacheilend vorgesehen ist. Auf Basis der durch die Sensoren erfassten Daten kann eine entlang der Applikationsbahn applizierte Menge der pastösen Masse ermittelt werden.

Aus der US 4 675 502 A ist eine Echtzeit-Steuerung bekannt für eine Roboterbewegung bekannt, bei der die Roboterbewegungen in drei Dimensionen kontinuierlich modifiziert werden, wobei sich der Roboter entlang einem gelernten Pfad bewegt. Der Roboter weist einen Sensor an dem Roboterarm auf, um die Position eines gewünschten Weges abzufühlen. Die Echtzeit-Steuerung stellt Echtzeit-Lenkbefehle an den Standard-Roboter zur Verfügung für einen vorgegebenen Weg mit dem Ziel der Aufrechterhaltung einer konstanten, vorprogrammierten Geschwindigkeit entlang dem gewünschten Weg.

Die Erfindung ist durch die unabhängigen Ansprüche definiert. Vorteilhafte Ausgestaltungen ergeben sich durch die abhängigen Ansprüche.

Eine Aufgabe der vorliegenden Erfindung besteht entsprechend darin, ein Verfahren zum Vermessen von Werkstücken der eingangs genannten Art sowie eine nach dem Verfahren arbeitende Vorrichtung anzugeben, das bzw. die die zitierten Nachteile vermeidet oder zumindest deren Auswirkungen verringert, insbesondere indem ein Zeitverzug zwischen Bildaufnahme und einer Verwertbarkeit von aus den aufgenommenen Kamerabildern extrahierten Informationen reduziert ist.

Diese Aufgabe wird hinsichtlich des Verfahrens erfindungsgemäß mittels eines Verfahrens zum Betrieb einer Produktions- und/oder Werkzeugmaschine mit den Merkmalen des Anspruchs 1 gelöst. Dabei ist im Rahmen des Verfahrens vorgesehen, dass der Produktions- und/oder Werkzeugmaschine eine in einem Arbeitsraum der Produktions- und/oder Werkzeugmaschine bewegliche Kamera zur Aufnahme von Bilddaten im Arbeitsraum der Produktions- und/oder Werkzeugmaschine zugeordnet ist, dass mittels der Kamera bei deren Bewegung im Arbeitsraum der Produktions- und/oder Werkzeugmaschine fortlaufend jeweils einzelne Kamerabilder aufgenommen werden, dass in den aufgenommenen Kamerabildern Kantenpunkte eines im Arbeitsraum der Produktions- und/oder Werkzeugmaschine befindlichen Werkstücks ermittelt werden und dass detektierte Kantenpunkte oder aber das gesamte Kamerabild zusammen mit einer laufenden Nummer des Kamerabilds oder einer sonstigen Orts- und/oder Zeitinformation an eine Steuerungseinrichtung der Produktions- und/oder Werkzeugmaschine zur Erkennung des jeweiligen Werkstücks und/oder zur Ermittlung einer Position und/oder Orientierung (Lage) des jeweiligen Werkstücks gesendet werden und/oder zur Erkennung von Abweichungen von einem Soll- und Istkantenverlauf.

Mittels des vorgeschlagenen Verfahrens wird also eine auf jeweils einzelne Abschnitte des Werkstücks beschränkte Echtzeit-Kantendetektion realisiert. Dadurch, dass mittels der im Arbeitsraum der Produktions- und/oder Werkzeugmaschine beweglichen Kamera fortlaufend jeweils einzelne Kamerabilder aufgenommen werden, wird jeweils gewissermaßen ein Ausschnitt aus einem den gesamten Arbeitsraum der Produktions- und/oder Werkzeugmaschine umfassenden Bild aufgenommen. Im Vergleich zu einem solchen, den gesamten Arbeitsraum der Produktions- und/oder Werkzeugmaschine umfassenden Bild sind die einzelnen Kamerabilder sehr viel schneller auswertbar und haben üblicherweise im Vergleich zu einem Ausschnitt eines Gesamtbilds eine höhere Auflösung, so dass die auf deren Basis extrahierbaren Informationen, insbesondere Informationen in Bezug auf in dem jeweiligen Kamerabild enthaltene Kanten des Werkstücks, sehr viel schneller und mit einer höheren Güte zur Verfügung stehen und damit unmittelbar für die Steuerung der Produktions- und/oder Werkzeugmaschine verwendbar sind (die Auswertung der Kamerabilder erfolgt vornehmlich nach dem Merkmal "Kante").

Das Ergebnis des Verfahrens ist eine eine Randlinie des jeweiligen Werkstücks beschreibende Folge von Kantenpunkten. Durch Vergleich mit einer vorgegebenen Kantengeometrie lassen sich zudem eine Lage und eine Orientierung des Werkstücks im Arbeitsraum sowie etwaige Abweichungen der so ermittelten Randlinie (Istrandlinie) und einer erwarteten Randlinie (Sollrandlinie) ermitteln. In einem weiteren Verarbeitungsschritt kann in der Steuerung aus den Kantenpunkten eine höherwertige geometrische Beschreibung erzeugt werden, z.B. anhand von Polynomen oder Splines.

Die oben genannte Aufgabe wird ebenfalls mittels einer Produktions- und/oder Werkzeugmaschine gelöst, die nach dem hier und im Folgenden beschriebenen Verfahren arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Produktions- und/oder Werkzeugmaschine oder eine Steuerungseinrichtung einer Produktions- und/oder Werkzeugmaschine, in deren Speicher als Mittel zur Durchführung des Verfahrens und seiner Ausgestaltungen ein solches Computerprogramm geladen oder ladbar ist.

Vorteilhafte Ausgestaltungen der Erfindung sind Gegenstand der Unteransprüche. Schließlich ist darauf hinzuweisen, dass die Produktions- und/oder Werkzeugmaschine auch entsprechend der abhängigen Verfahrensansprüche weitergebildet sein kann, indem die Produktions- und/oder Werkzeugmaschine Mittel zur Ausführung eines Verfahrens mit den dort zusätzlich angegebenen Merkmalen umfasst, und umgekehrt.

Bei einer Ausführungsform des Verfahrens erfolgt in einem Kamerabild eine Suche nach Kantenpunkten ausgehend von einem jeweiligen Bildmittelpunkt radial in einer Mehrzahl vorgegebener oder vorgebbarer Richtungen bis zu den Rändern des jeweiligen Kamerabilds. Ein Beginn der Suche nach Kantenpunkten jeweils ausgehend vom Bildmittelpunkt basiert auf der Annahme, dass sich relevante Bildinhalte eher in der Mitte des jeweils aufgenommenen Kamerabilds befinden, so dass davon ausgegangen werden kann, dass eine vom Bildmittelpunkt ausgehende Suche nach Kantenpunkten eher und damit schneller zu Resultaten führt, als eine zum Beispiel von einer Ecke des aufgenommenen Kamerabilds ausgehende Suche. Wenn entlang einer radialen Richtung ein Kantenpunkt erkannt wurde, kann bei einer besonderen Variante dieser Ausführungsform des Verfahrens die weitere Suche nach Kantenpunkten in dieser radialen Richtung abgebrochen werden, wodurch Ergebnisse zumindest im Mittel noch schneller zur Verfügung stehen. Die Suche entlang einer Mehrzahl radialer Richtungen beschleunigt zudem in jedem Fall die Suche nach Kantenpunkten, denn es wird in die jeweilige radiale Richtung gleichsam entlang eines Suchstrahls gesucht und dabei werden nur diejenigen Bildpunkte des Kamerabilds betrachtet, die auf dem Suchstrahl oder in einem vorgegebenen oder vorgebbaren Abstand zum Suchstrahl liegen, so dass sich die Anzahl der zu untersuchenden Bildpunkte im Vergleich zu der Gesamtanzahl der Bildpunkte des Kamerabilds deutlich reduziert, ohne die Qualität des Suchergebnisses zu verringern.

Bei einer Ausführungsform des Verfahrens, bei dem die Form und die ungefähre Lage des Werkstücks bereits bekannt sind, wird die Kamera mittels der Steuerungseinrichtung der Produktions- und/oder Werkzeugmaschine entlang einer vorgegebenen Bahn entsprechend der Form und der angenommenen Lage des Werkstücks geführt. Dieser Vorgang kann anhand der Sollrandlinie des Werkstücks erfolgen und eine eventuelle Offsetberechnung erfolgt mittels der Steuerungseinrichtung. Die Kantenpunkte, auf deren Basis schließlich die tatsächliche Lage des Werkstücks ermittelt wird, können dann von Anfang an im Bereich der tatsächlichen Randlinie des Werkstücks gesucht werden, so dass eine unnötige Aufnahme von Kamerabildern und eine Suche nach Kantenpunkten in Bereichen des Arbeitsraums der Produktions- und/oder Werkzeugmaschine, in denen sich das Werkstück nicht befindet, unterbleiben kann. Eine Besonderheit des Verfahrens besteht hier darin, dass die Steuerungseinrichtung zum Beispiel über Informationen zur Bauteilgeometrie entweder in Form von CAD-Daten oder CAM-Daten oder von Ablaufprogrammen wie dem Teileprogramm verfügt. Aus diesen Daten kann der erwartete Verlauf der Randlinie des Werkstücks extrahiert werden. Alternativ kann der Kantenverlauf über die Programmierschnittstelle der Produktions- und/oder Werkzeugmaschine in Form eines Ablaufprogramms von extern vorgegeben werden.

Bei einer Ausführungsform des Verfahrens, bei dem die Form und/oder die Lage des Werkstücks unbekannt ist, wird die Kamera mittels der Steuerungseinrichtung der Produktions- und/oder Werkzeugmaschine jeweils entsprechend einer Trendrichtung geführt, wobei sich die Trendrichtung aus einer Analyse vorangehender Kamerabilder und dort detektierter Kantenpunkte ergibt. Auf diese Weise können eine Lage und eine Orientierung sowie - soweit erforderlich - eine Kontur oder dergleichen eines jeweiligen Werkstücks auch dann ermittelt werden, wenn zuvor keine spezifischen Daten zu dem Werkstück vorliegen.

Bei einer speziellen Variante des Verfahrens, die zur Verwendung bei allen bisher beschriebenen Ausführungsformen in Betracht kommt, werden die in einem Kamerabild ermittelten Kantenpunkte entsprechend ihrer Position relativ zur Bildmitte des jeweiligen Kamerabilds gewichtet. Dies geht von der Erkenntnis aus, dass Kantenpunkte in der Nähe des Mittelpunkts des Kamerabilds genauer erfasst werden als am Rand des Kamerabilds. Die Lage solcher Kantenpunkte ist also exakter, weil Bildpunkte in der Nähe der Bildmitte zum Beispiel geringer von optischen Verzerrungen und dergleichen beeinflusst sind. Weil dieselbe Stelle einer Werkstückkante beim kontinuierlichen Bewegen der Kamera mehrfach identifiziert wird, lässt sich mittels der Gewichtung der Kantenpunkte sicherstellen, dass in der Nähe der Bildmitte detektierte Kantenpunkte eine höhere Relevanz erhalten als solche, die im Bereich der Bildränder detektiert wurden.

Bei einer weiteren Ausführungsform des Verfahrens wird die Kamera mittels der Steuerungseinrichtung der Produktions- und/oder Werkzeugmaschine entlang einer Randlinie des Werkstücks geführt und zwar entweder aufgrund einer bereits bekannten Geometrie des Werkstücks oder aufgrund einer während der Bewegung entlang der Randlinie fortwährend ermittelten Trendrichtung. Während der Bewegung entlang der Randlinie werden fortlaufend Kamerabilder aufgenommen und in den Kamerabildern werden Kantenpunkte des Werkstücks ermittelt. Anhand eines Bildmittelpunkts der Kamerabilder oder einer Referenz-Kameraposition, die sich durch Transformation aus der Position der Produktions- und/oder Werkzeugmaschine ableiten lässt, und eines Abstands des Bildmittelpunkts oder einer solchen Referenz-Kameraposition zu dem Kantenpunkt oder den Kantenpunkten wird sodann ein Kantenoffset ermittelt und die Position der Kamera wird automatisch korrigiert, so dass der Kantenoffset bei der Bewegung der Kamera entlang der Randlinie des Werkstücks gleich oder zumindest im Wesentlichen gleich bleibt. Auf diese Weise wird die genaue Kontur des Werkstücks entlang der kompletten Randlinie ermittelt. Mittels einer Koordinatentransformation können die so ermittelten Informationen in Koordinaten der Produktions- und/oder Werkzeugmaschine umgerechnet werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: eine Werkzeugmaschine mit einer mittels der Kinematik der Werkzeugmaschine in deren Arbeitsraum beweglichen Kamera,
- FIG 2: von der im Arbeitsraum beweglichen Kamera aufgenommene Bilder entlang einer Kante eines im Arbeitsraum der Werkzeugmaschine befindlichen Werkstücks,
- FIG 3: ein von der Kamera in Bezug auf eine Randlinie des Werkstücks aufgenommenes Bild als Basis für eine Ermittlung einer Trendrichtung,
- FIG 4: von der Kamera in Bezug auf eine Randlinie des Werkstücks aufgenommene Bilder mit darin detektierten Kantenpunkten sowie deren Gewichtung in Abhängigkeit von einem Abstand zur Bildmitte und
- FIG 5: bei einer Bewegung der Kamera entlang einer Randlinie des Werkstücks aufgenommene Bilder und einen jeweiligen Kantenoffset zwischen einem Bildmittelpunkt und der Randlinie des Werkstücks.

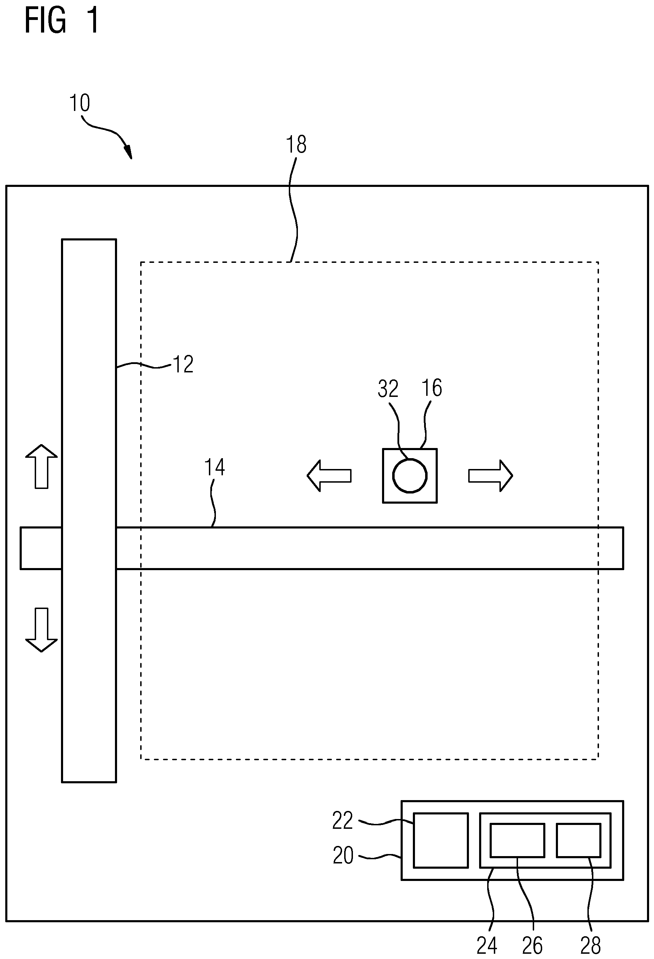

Die Darstellung in FIG 1 zeigt in schematisch vereinfachter Form eine zweiachsige Werkzeugmaschine 10. Als Produktions- und/oder Werkzeugmaschine kommt zum Beispiel auch ein Industrieroboter oder dergleichen in Betracht.

Mittels einer hier lediglich exemplarisch und ohne Verzicht auf eine weitergehende Allgemeingültigkeit als Freiheitsgrade der Werkzeugmaschine 10 gezeigten ersten und zweiten Linearachse 12, 14 ist eine Werkzeugaufnahmevorrichtung 16 der Werkzeugmaschine 10 im Arbeitsraum 18 der Werkzeugmaschine 10 beweglich.

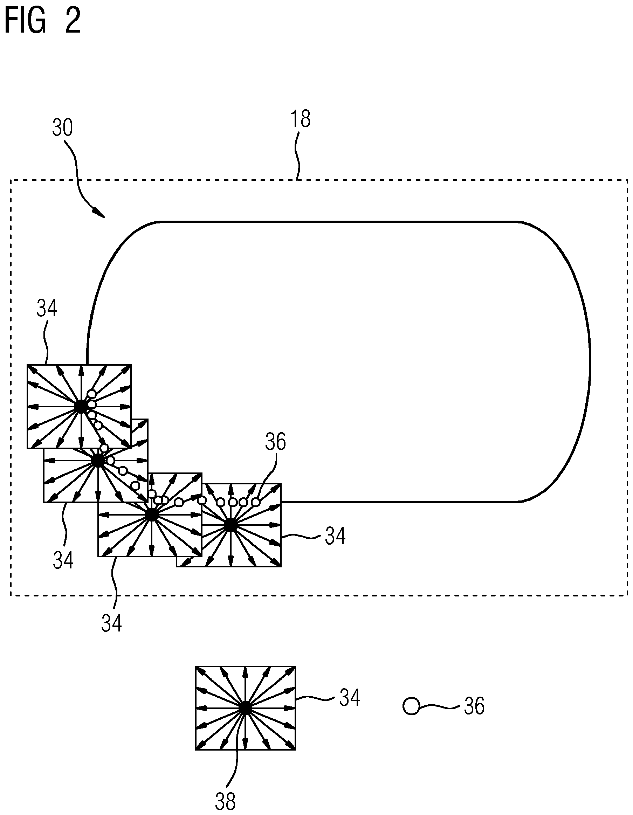

Zur Steuerung und Überwachung der Werkzeugmaschine 10 ist eine Steuerungseinrichtung 20 vorgesehen. Diese umfasst in an sich bekannter Art und Weise eine Verarbeitungseinheit in Form von oder nach Art eines Mikroprozessors 22 sowie einen Speicher 24. In den Speicher 24 ist ein Steuerungsprogramm 26 geladen, das beim Betrieb der Werkzeugmaschine 10 durch die jeweilige Verarbeitungseinheit ausgeführt wird. Unter Kontrolle des Steuerungsprogramms 26 erfolgt die Ausführung eines Werkstückprogramms 28, welches in an sich bekannter Art und Weise die in Bezug auf ein Werkstück 30 (FIG 2) auszuführenden Bearbeitungs-/Produktionsschritte definiert. Mit der Werkzeugaufnahmevorrichtung 16 ist eine Kamera 32 zur Aufnahme von Kamerabildern 34 (FIG 2) im Arbeitsraum 18 der Werkzeugmaschine 10 verbunden. Die Kamera 32 kann dabei fest mit der Werkzeugaufnahmevorrichtung 16 verbunden sein oder mittels eigener Bewegungsachsen an der Werkzeugaufnahmevorrichtung 16 zusätzliche Bewegungsmöglichkeiten (Freiheitsgrade) erhalten.

Die Darstellung in FIG 2 zeigt in schematisch vereinfachter Form einen Ausschnitt aus dem Arbeitsraum 18 einer hier nicht mehr gezeigten Werkzeugmaschine 10 (FIG 1) der eingangs genannten Art. In dem Arbeitsraum 18 der Werkzeugmaschine 10 befindet sich ein Werkstück 30, dessen Lage und Orientierung sowie exakte Kantengeometrie mittels des hier vorgeschlagenen Verfahrens im Arbeitsraum 18 der Werkzeugmaschine 10 ermittelt wird.

Dazu werden mittels der im Arbeitsraum 18 der Werkzeugmaschine 10 beweglichen Kamera 32 (FIG 1) fortlaufend bei deren Bewegung im Arbeitsraum 18 jeweils einzelne Kamerabilder 34 aufgenommen. In den aufgenommenen Kamerabildern 34 werden sodann Kantenpunkte 36 des jeweils im Arbeitsraum 18 der Werkzeugmaschine 10 befindlichen Werkstücks 30 ermittelt. Detektierte Kantenpunkte 36 werden zusammen mit einer laufenden Nummer des Kamerabilds 34 oder einer sonstigen, eine Position des jeweiligen Kamerabilds 34 in Bezug auf den Arbeitsraum 18 codierenden Ortsinformation, zum Beispiel einem Zeit- und/ oder Ortsstempel, an die Steuerungseinrichtung 20 der Werkzeugmaschine 10 zur Erkennung des jeweiligen Werkstücks 30 und/oder zur Ermittlung einer Orientierung des jeweiligen Werkstücks 30 gesendet. Das Ziel ist die Generierung eines zusammenhängenden Konturzugs aus den Kantenpunkten und die laufende Nummer oder die oder jede sonstige Ortsinformation erlaubt die positionsgerechte Anordnung oder Auswertung der Kamerabilder 34 oder der darin jeweils enthaltenen Kantenpunkte 36. Dabei beschreibt der Konturzug die tatsächliche Kantengeometrie des Werkstücks 30. Zudem werden anhand der Kantenpunkte und/oder des Konturzugs durch die Steuerungseinrichtung 20 die Lage und die Orientierung des Werkstücks 30 im Arbeitsraum 18 der Werkzeugmaschine 10 bestimmt.

Die Darstellung in FIG 2 zeigt eine Momentaufnahme bei der fortlaufenden Aufnahme einzelner Kamerabilder 34 im Arbeitsraum 18 der Werkzeugmaschine 10. Gezeigt sind hier exemplarisch vier Kamerabilder 34, wobei im weiteren Verlauf des Verfahrens weitere, hier nicht gezeigte Kamerabilder 34 aufgenommen werden. Jedes Kamerabild 34 wird einzeln ausgewertet. Eine Möglichkeit einer Auswertung eines einzelnen Kamerabilds 34 besteht darin, dass ausgehend von einem jeweiligen Bildmittelpunkt 38 radial in eine Mehrzahl vorgegebener oder vorgebbarer Richtungen bis zu den Rändern des Kamerabilds 34 nach etwaigen, von dem Kamerabild 34 erfassten Kanten des Werkstücks 30 gesucht wird (Kantensuche). Ansonsten besteht auch die Möglichkeit zur Verwendung üblicher digitaler Bildverarbeitungsalgorithmen.

Die Darstellung in FIG 2 zeigt zu Erläuterungszwecken im unteren Bereich ein einzelnes Kamerabild 34, von dessen Bildmittelpunkt 38 eine Mehrzahl von radialen Suchstrahlen, insbesondere eine Mehrzahl von radialen Suchstrahlen mit einem gleichbleibenden Winkelabstand, ausgeht. Die Anzahl der jeweils verwendeten Suchstrahlen ist vorgegeben oder mittels einer Parametrierung vorgebbar. In Betracht kommen zum Beispiel vier jeweils 90° beabstandete Suchstrahlen, acht jeweils 45° beabstandete Suchstrahlen, achtzehn jeweils 20° beabstandete Suchstrahlen, sechsunddreißig jeweils 10° beabstandete Suchstrahlen, usw.

Wenn entlang eines Suchstrahls oder in sonstiger Art und Weise in dem Kamerabild 34 eine Kante des jeweiligen Werkstücks 30 gefunden wird, ist dies ein Kantenpunkt 36 des Werkstücks 30 und die Darstellung eines solchen Kantenpunkts 36 ist in FIG 2 in deren unterem Bereich ebenfalls zu Erläuterungszwecken separat gezeigt. Die Darstellung der in Bezug auf den Arbeitsraum 18 der Werkzeugmaschine 10 aufgenommenen Kamerabilder 34 umfasst jeweils eine Mehrzahl von Kantenpunkten 36, die dort im Interesse einer Übersichtlichkeit der Darstellung nicht separat bezeichnet, aber in der gleichen Art und Weise dargestellt sind.

Eine vom Bildmittelpunkt 38 ausgehende Kantensuche hat den Vorteil, dass - anders als zum Beispiel bei einer von einer Ecke des Kamerabilds 34 ausgehenden Kantensuche - damit zu rechnen ist, dass ausgehend vom Bildmittelpunkt 38 eine eventuell von dem Kamerabild 34 erfasste Kante des Werkstücks 30 besonders schnell gefunden wird. Eine solche vom Bildmittelpunkt 38 in mehrere radiale Richtungen ausgehende Kantensuche kann noch nach Art eines Einschließungsverfahrens optimiert werden. Die Kantensuche beginnt zum Beispiel in 12-Uhr-Richtung und setzt sich dann mit einer Suche in 3-Uhr-Richtung, 6-Uhr-Richtung und 9-Uhr-Richtung fort. Wenn entlang einer dieser Suchstrahlen ein Kantenpunkt 36 des Werkstücks 30 erkannt wurde, kann die Suche nach weiteren Kantenpunkten 36 auf Suchstrahlen in der Nähe der bereits detektierten Kantenpunkte 36 konzentriert werden, zum Beispiel auf einen Bereich zwischen zwei Suchstrahlen, entlang derer jeweils ein Kantenpunkt 36 detektiert wurde.

Die Darstellung in FIG 2 geht von einer Situation aus, bei der die Kamera 32 mittels der Steuerungseinrichtung 20 der Werkzeugmaschine 10 entlang einer vorgegebenen Bahn bewegt wird. Die jeweils verwendete Bahn geht dabei von einer erwarteten Lage des Werkstücks 30 im Arbeitsraum 18 der Werkzeugmaschine 10 aus und durch Abfahren der Bahn und Ermitteln der Kantenpunkte 36 in den dabei aufgenommenen Kamerabildern 34 kann die exakte Lage, Orientierung und Kantengeometrie des Werkstücks 30 ermittelt werden. Bei der Bewegung der Kamera 32 entlang der vorgegebenen Bahn werden zum Beispiel zwanzig bis vierzig Kamerabilder 34 pro Sekunde aufgenommen und in jedem einzelnen Kamerabild 34 erfolgt eine Suche nach davon umfassten Kantenpunkten 36. Dafür werden die Kamerabilder 34 an die Steuerungseinrichtung 20 der Werkzeugmaschine 10 gesendet, wo mittels grundsätzlich an sich bekannter Bildverarbeitungsalgorithmen eine Detektion etwaiger Kantenpunkte 36 erfolgt.

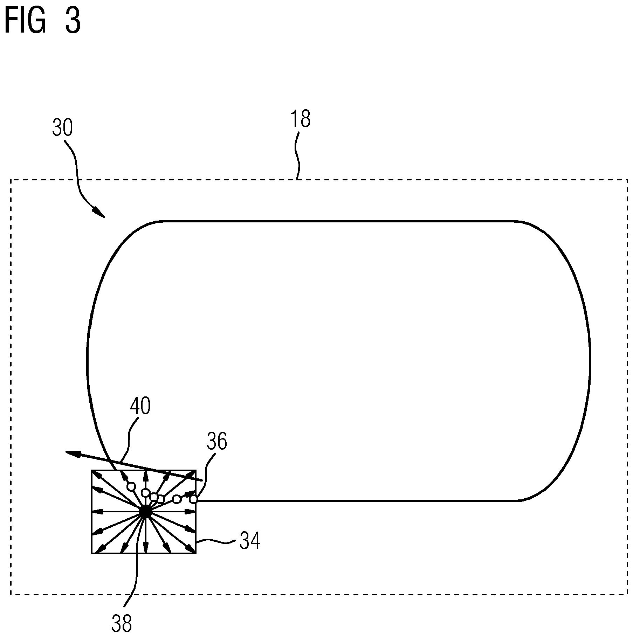

Die Darstellung in FIG 3 illustriert eine besondere Ausführungsform des hier vorgeschlagenen Verfahrens, die speziell dann zum Einsatz kommt, wenn die Kontur des Werkstücks 30, dessen Lage und Orientierung zu ermitteln ist, unbekannt ist und entsprechend die Kamera 32 nicht automatisch entlang einer vorgegebenen Bahn geführt werden kann. Dann wird die Kamera 32 entweder einmalig vom jeweiligen Bediener der Werkzeugmaschine 10 an eine Werkstückkante geführt oder die Kamera 32 wird unter Kontrolle der Steuerungseinrichtung 20 im Arbeitsraum bewegt, bis durch eine erste Detektion zumindest eines Kantenpunkts 36 eine erste Werkstückkante ermittelt wurde. Die Darstellung in FIG 3 zeigt eine Momentaufnahme einer Situation, bei der sich die Kamera 32 im Bereich einer Werkstückkante befindet, so dass ein dort aufgenommenes Kamerabild 34 bereits mehrere Kantenpunkte 36 umfasst. Dann kann auf Basis der Kantenpunkte 36 eine Trendlinie 40 ermittelt werden. Die Trendlinie 40 gibt eine Richtung (Trendrichtung) vor, in welcher der weitere Verlauf der Randlinie des Werkstücks 30 erwartet werden kann. Die jeweilige Trendrichtung, in welche in einem nachfolgenden Schritt die Bewegung der Kamera 32 erfolgt, ergibt sich also aus einer Analyse zumindest eines Kamerabilds 34 oder einer Mehrzahl vorangehender Kamerabilder 34 und dort detektierter Kantenpunkte 36. Die Kamera 32 wird mittels der Werkzeugaufnahmevorrichtung 16 in dieser Richtung bewegt, wobei eine kontinuierliche Ermittlung einer jeweils aktuellen Trendlinie 40 gewährleistet, dass die Kamera 32 entlang der Randlinie geführt wird.

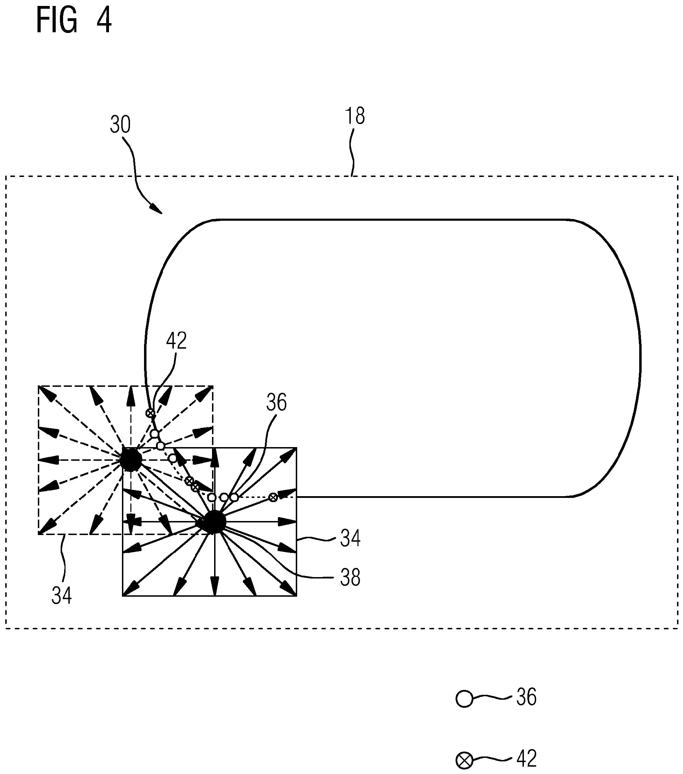

Die Darstellung in FIG 4 illustriert eine weitere besondere Ausführungsform des hier vorgeschlagenen Verfahrens, die sowohl bei der Ermittlung der Kontur des Werkstücks 30 (FIG 2) wie auch bei der Ermittlung der Trendlinie 40 (FIG 3) verwendbar ist. Danach werden die in einem Kamerabild 34 ermittelten Kantenpunkte 36 entsprechend ihrer Position relativ zum Bildmittelpunkt 38 des jeweiligen Kamerabilds 34 gewichtet. Auf diese Weise ergeben sich Kantenpunkte 36 mit einer hohen Gewichtung und Kantenpunkte 42 mit einer niedrigen Gewichtung. Die Darstellungsform der beiden Arten der Kantenpunkte 36, 42 ist im unteren Bereich der Darstellung von FIG 4 nochmals wiederholt, so dass auf eine Bezeichnung jedes einzelnen Kantenpunkts 36, 42 in den beiden gezeigten Kamerabildern 34 verzichtet wurde.

Die detektierten Kantenpunkte 36 werden zusammen mit einer laufenden Nummer des Kamerabilds 34 oder einer sonstigen Ortsinformation an die Steuerungseinrichtung 20 der Werkzeugmaschine 10 gesendet. Auf der Basis der so an die Steuerungseinrichtung 20 übermittelten Kantenpunkte 36 kann die Erkennung des jeweiligen Werkstücks 30 und/oder die Ermittlung der Orientierung des jeweiligen Werkstücks 30 erfolgen. Eine laufende Nummer des jeweiligen Kamerabilds 34 zusammen mit einer Information hinsichtlich der Position, in der sich die Kamera 32 zum Zeitpunkt der Aufnahme des jeweiligen Kamerabilds 34 gefunden hat (abgeleitet aus der Achsposition der Werkzeugmaschine 10 und der Information, an welcher Position die Kamera 32 an der Werkzeugmaschine 10 angebracht ist), erlaubt eine Zuordnung von Positionsinformationen zu dem oder jedem zu diesem Kamerabild 34 gehörigen Kantenpunkt 36. Auf diese Weise kann die Gesamtheit der von den aufgenommenen Kamerabildern 34 umfassten Kantenpunkte 36 positionsrichtig kombiniert werden, so dass mittels an sich bekannter und daher hier nicht erwähnter und auch nicht näher erläuterter Algorithmen eine automatische Auswertung der ermittelten Kantenpunkte 36 und auf deren Basis eine Erkennung der Lage und Orientierung des jeweiligen Werkstücks 30 im Arbeitsraum 18 und/oder eine (absolute) Erkennung der Kantengeometrie des Werkstücks 30 selbst möglich ist.

Eine solche automatische Verarbeitung umfasst auch grundsätzlich an sich bekannte Korrekturrechnungen sowie Koordinatentransformationen, denn die im Koordinatensystem der Kamera 32 detektierten Kantenpunkte 36 müssen zusammen mit Informationen hinsichtlich einer jeweiligen Position der Achsen 12, 14 der Werkzeugmaschine 10 bei der Aufnahme des Kamerabilds 34 zu Koordinatenpositionen im Maschinenkoordinatensystem oder aber im Werkstückkoordinatensystem der Werkzeugmaschine 10 verrechnet werden. Bei einer derartigen Verrechnung ist auf einen möglichst kleinen Zeitversatz zwischen der Aufnahme des Kamerabilds 34 und der Erfassung der zugehörigen Achspositionen zu achten. Dafür ist eine Hardware- oder Software-Triggerung vorgesehen, die entweder von der Kamera 32 oder von der Steuerungseinrichtung 20 initiiert wird.

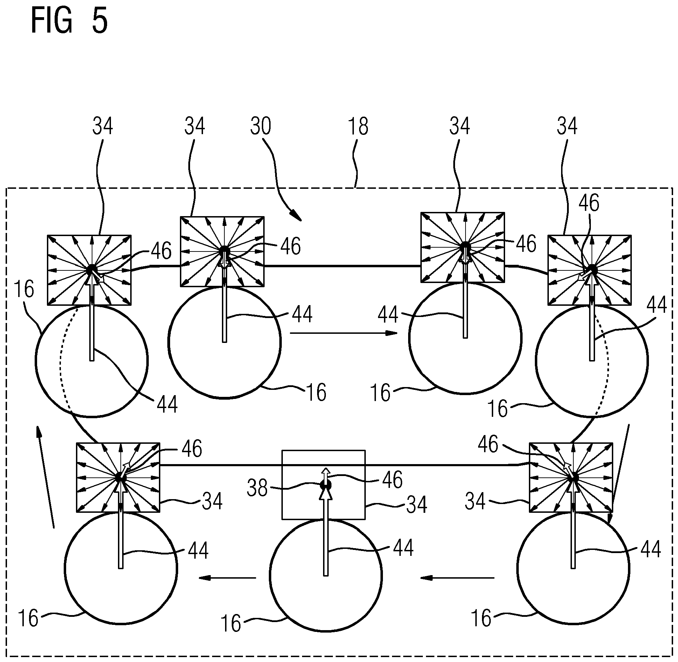

Die Darstellung in FIG 5 zeigt abschließend eine mittels der Steuerungseinrichtung 20 automatisch durchgeführte Korrektur der Position der Kamera 32 relativ zur Kante des jeweiligen Werkstücks 30. Gezeigt sind mehrere Momentaufnahmen einer Position der Werkzeugaufnahmevorrichtung 16, zum Beispiel einer als Werkzeugaufnahmevorrichtung 16 fungierenden Spindel, und dort jeweils aufgenommene Kamerabilder 34. Die Kamera 32 befindet sich dabei seitlich an der Werkzeugaufnahmevorrichtung 16. Aufgrund der Anbringung der Kamera 32 seitlich an der Werkzeugaufnahmevorrichtung 16 ergibt sich ein konstanter Abstand zwischen einem jeweiligen Bildmittelpunkt 38 und einem Zentrum der Werkzeugaufnahmevorrichtung 16. Dieser Abstand wird im Folgenden als Werkzeugoffsetvektor oder kurz als Werkzeugoffset 44 ("Tooloffset") bezeichnet. Die Kamera 32 wird mittels einer entsprechenden Positionierung der Werkzeugaufnahmevorrichtung 16 an das Werkstück 30 herangefahren und zwar so lange, bis sich der Bildmittelpunkt 38 in einem vorgegebenen oder vorgebbaren Abstand von der Randlinie des Werkstücks 30 befindet. Dieser Abstand wird im Folgenden als Kantenoffsetvektor oder kurz als Kantenoffset 46 bezeichnet. Die Kamera 32 soll nun automatisch so entlang der Randlinie des Werkstücks 30 geführt werden, dass der Kantenoffset 46, also die Länge des Kantenoffsetvektors 46, gleich oder zumindest im Wesentlichen gleich bleibt, wobei der Kantenoffsetvektor 46 der Randlinie in einer vorgegebenen Orientierung folgt, zum Beispiel indem der Kantenoffsetvektors 46 auf dem jeweiligen Abschnitt der Randlinie senkrecht steht. Dabei wird die Werkzeugaufnahmevorrichtung 16 mit der daran angebrachten Kamera 32 entweder entlang einer aufgrund einer bekannten Werkstückgeometrie vorgegebenen Bahn oder entlang einer Bahn, wie sie sich aufgrund einer Ermittlung einer Trendlinie 40 (FIG 3) ergibt, bewegt. Unabhängig von der Art der Bahnführung werden in dem jeweils aufgenommenen Kamerabild 34 nach den bisher beschriebenen Ansätzen Kantenpunkte 36 des Werkstücks 30 ermittelt. Auf Basis des oder jedes dabei ermittelten Kantenpunkts 36 wird der Abstand zur Randlinie des Werkstücks 30, also der Kantenoffset 46 bestimmt. In Abhängigkeit von dem so ermittelten Kantenoffsetvektor 46 wird die Position der Werkzeugaufnahmevorrichtung 16 mittels der Steuerungseinrichtung 20 ggf. korrigiert, wenn die Länge des jeweils ermittelten Kantenoffsetvektors 46 vom vorgegebenen Kantenoffset 46 abweicht. Wenn auf diese Weise - mit einem jeweils automatisch in Richtung und Abstand korrigierten Kantenoffset 46 - die Randlinie des Werkstücks 30 einmal abgefahren ist, ist die konkrete Kontur des Werkstücks 30 vollständig bekannt. Zur Umrechnung der Positionsinformationen der jeweils aufgenommenen Kamerabilder 34 in das Koordinatensystem der Werkzeugmaschine 10 erfolgt eine grundsätzlich an sich bekannte Koordinatentransformation. Dabei werden der Werkzeugoffsetvektor 44 und ggf. die Richtung des Werkzeugoffsetvektors 44 sowie der Kantenoffsetvektor 46 und die Richtung des Kantenoffsetvektors 46 berücksichtigt. Wenn die Kamera 32 so an der Werkzeugaufnahmevorrichtung 16 angebracht ist, dass der Bildmittelpunkt 38 jeweils aufgenommener Kamerabilder 34 und das Zentrum der Werkzeugaufnahmevorrichtung 16 zusammenfallen, ist der Werkzeugoffset 44 Null.

Einzelne im Vordergrund stehende Aspekte der hier eingereichten Beschreibung lassen sich damit kurz wie folgt zusammenfassen: Angegeben werden ein Verfahren zum Vermessen von Werkstücken 30 und eine nach dem Verfahren arbeitende Werkzeugmaschine 10, wobei der Werkzeugmaschine 10 eine in einem Arbeitsraum 18 der Werkzeugmaschine 10 bewegliche Kamera 32 zur Aufnahme von Bilddaten im Arbeitsraum der Werkzeugmaschine 10 zugeordnet ist, wobei mittels der Kamera 32 bei deren Bewegung im Arbeitsraum 18 der Werkzeugmaschine 10 fortlaufend jeweils einzelne Kamerabilder 34 aufgenommen werden, wobei in den aufgenommenen Kamerabildern 34 Kantenpunkte 36 eines im Arbeitsraum 18 der Werkzeugmaschine 10 befindlichen Werkstücks 30 ermittelt werden und wobei detektierte Kantenpunkte 36 zusammen mit einer laufenden Nummer des Kamerabilds 34 oder einer sonstigen Ortsinformation an eine Steuerungseinrichtung 20 der Werkzeugmaschine 10 zur Erkennung des jeweiligen Werkstücks 30 und/oder zur Ermittlung einer Orientierung des jeweiligen Werkstücks 30 gesendet werden.

## Patentansprüche

1. Verfahren zum Betrieb einer Produktions- und/oder Werkzeugmaschine (10),
wobei der Produktions- und/oder Werkzeugmaschine (10) eine in einem Arbeitsraum (18) der Produktions- und/oder Werkzeugmaschine (10) bewegliche Kamera (32) zur Aufnahme von Bilddaten im Arbeitsraum (18) der Produktions- und/oder Werkzeugmaschine (10) zugeordnet ist,
wobei mittels der Kamera (32) bei deren Bewegung im Arbeitsraum (18) der Produktions- und/oder Werkzeugmaschine (10) fortlaufend jeweils einzelne Kamerabilder (34) aufgenommen werden,
wobei in den aufgenommenen Kamerabildern (34) Kantenpunkte (36) eines im Arbeitsraum (18) der Produktions- und/oder Werkzeugmaschine (10) befindlichen Werkstücks (30) ermittelt werden,
wobei detektierte Kantenpunkte (36) an eine Steuerungseinrichtung (20) der Produktions- und/oder Werkzeugmaschine (10) zur Erkennung des jeweiligen Werkstücks (30) und/oder zur Ermittlung einer Position und/oder Orientierung des jeweiligen Werkstücks (30) gesendet werden und
wobei die Kamera (32) mittels der Steuerungseinrichtung (20) der Produktions- und/oder Werkzeugmaschine (10) entlang einer Randlinie des Werkstücks (30) geführt wird,
wobei fortlaufend Kamerabilder (34) aufgenommen und in den Kamerabildern (34) Kantenpunkte (36) des Werkstücks (30) ermittelt werden,
wobei anhand eines Bildmittelpunkts (38) der Kamerabilder (34) und eines Abstands des Bildmittelpunkts (38) zu dem oder den Kantenpunkten (36) eine Länge eines Kantenoffsetvektors (46) ermittelt wird,
wobei die Position der Kamera (32) automatisch korrigiert wird, so dass die Länge des Kantenoffsetvektors (46) entlang der Randlinie des Werkstücks (30) gleich oder zumindest im Wesentlichen gleich bleibt,
wobei die detektierten Kantenpunkte (36) zusammen mit einer laufenden Nummer des Kamerabilds (34) oder einer sonstigen Ortsinformation an die Steuerungseinrichtung (20) der Werkzeugmaschine (10) gesendet werden und
wobei auf der Basis der an die Steuerungseinrichtung (20) übermittelten Kantenpunkte (36) eine Erkennung des jeweiligen Werkstücks (30 und/oder die Ermittlung der Orientierung des jeweiligen Werkstücks (30) erfolgt.

2. Verfahren nach Anspruch 1, wobei in einem Kamerabild (34) eine Suche nach Kantenpunkten (36) ausgehend von einem jeweiligen Bildmittelpunkt (38) radial in eine Mehrzahl vorgegebener oder vorgebbarer Richtungen bis zu den Rändern des Kamerabilds (34) erfolgt.

3. Verfahren nach Anspruch 1 oder 2, wobei die Kamera (32) mittels der Steuerungseinrichtung (20) der Produktions- und/oder Werkzeugmaschine (10) entlang einer vorgegebenen Bahn geführt wird.

4. Verfahren nach Anspruch 1, 2 oder 3, wobei die Kamera (32) mittels der Steuerungseinrichtung (20) der Produktions- und/oder Werkzeugmaschine (10) jeweils entsprechend einer Trendrichtung geführt wird, wobei sich die Trendrichtung aus einer Analyse vorangehender Kamerabilder (34) und dort detektierter Kantenpunkte (36) ergibt.

5. Verfahren nach einem der vorangehenden Ansprüche, wobei die in einem Kamerabild (34) ermittelten Kantenpunkte (36) entsprechend ihrer Position relativ zur Bildmitte des jeweiligen Kamerabilds (34) gewichtet werden.

6. Computerprogramm (26) mit Programmcodemitteln, die auf einem computerlesbaren Datenträger gespeichert sind, um alle Schritte von jedem beliebigen der Ansprüche 1 bis 5 durchzuführen, wenn das Computerprogramm (26) auf einer Steuerungseinrichtung (20) einer Produktions- und/oder Werkzeugmaschine (10) ausgeführt wird.

7. Digitales Speichermedium mit elektronisch auslesbaren Steuersignalen, die eine programmierbare Steuerungseinrichtung (20) einer Produktions- und/oder Werkzeugmaschine (10) derart programmieren, dass ein Verfahren nach einem der Ansprüche 1 bis 5 ausgeführt wird.

8. Produktions- und/oder Werkzeugmaschine (10) mit einer Verarbeitungseinheit (22) und einem Speicher (24) in den als ein Computerprogramm nach Anspruch 6 ein Steuerungsprogramm (26) geladen ist, das im Betrieb der Produktions- und/oder Werkzeugmaschine (10) durch die Verarbeitungseinheit (22) ausgeführt wird.

9. Verwendung eines Verfahrens nach einem der Ansprüche 1 bis 5 zur Generierung eines Bearbeitungsprogramms für eine Produktions- und/oder Werkzeugmaschine (10) zur Bearbeitung eines Werkstücks (30) mit dem Ziel, eine auf Basis der detektierten Kantenpunkte (36) ermittelte Sollkante am Werkstück (30) herzustellen.

## Claims

1. Method for operating a production and/or machine tool (10),
wherein the production and/or machine tool (10) is assigned a camera (32) which is movable in a workspace (18) of the production and/or machine tool (10) for recording image data in the workspace (18) of the production and/or machine tool (10),
wherein the camera (32) is used to continuously record individual camera images (34) in each case during its movement in the workspace (18) of the production and/or machine tool (10),
wherein edge points (36) of a workpiece (30) located in the workspace (18) of the production and/or machine tool (10) are determined in the recorded camera images (34),
wherein detected edge points (36) are sent to a control device (20) of the production and/or machine tool (10) for identifying the respective workpiece (30) and/or for determining a position and/or orientation of the respective workpiece (30) and
wherein the camera (32) is guided along an edge line of the workpiece (30) by means of the control device (20) of the production and/or machine tool (10),
wherein camera images (34) are recorded continuously and edge points (36) of the workpiece (30) are determined in the camera images (34),
wherein a length of an edge offset vector (46) is determined on the basis of an image centre point (38) of the camera images (34) and a distance of the image centre point (38) relative to the edge point or points (36),
wherein the position of the camera (32) is corrected automatically so that the length of the edge offset vector (46) along the edge line of the workpiece (30) remains the same or at least essentially the same,
wherein the detected edge points (36) together with a sequence number of the camera image (34) or other position information is sent to the control device (20) of the machine tool (10) and
wherein on the basis of the edge points (36) transmitted to the control device (20), the respective workpiece (30) is identified and the orientation of the respective workpiece (30) is determined.

2. Method according to claim 1, wherein a search for edge points (36) is carried out in a camera image (34) starting from a respective image centre point (38) radially in a plurality of predetermined or predeterminable directions as far as the edges of the camera image (34).

3. Method according to claim 1 or 2, wherein the camera (32) is guided along a predetermined path by means of the control device (20) of the production and/or machine tool (10).

4. Method according to claim 1, 2 or 3, wherein the camera (32) is guided according to a trend direction by means of the control device (20) of the production and/or machine tool (10) in each case, wherein the trend direction results from an analysis of preceding camera images (34) and edge points (36) detected there.

5. Method according to one of the preceding claims, wherein the edge points (36) determined in a camera image (34) are weighted according to their position relative to the image centre of the respective camera image (34).

6. Computer program (26) with program code means, which are stored on a computer-readable data carrier, in order to carry out all steps of any one of claims 1 to 5, when the computer program (26) is executed on a control device (20) of a production and/or machine tool (10).

7. Digital storage medium with electronically readable control signals which program a programmable control device (20) of a production and/or machine tool (10) such that a method according to one of claims 1 to 5 is executed.

8. Production and/or machine tool (10) with a processing unit (22) and a storage device (24) into which a control program (26) is loaded as a computer program according to claim 6, which is executed by the processing unit (22) during operation of the production and/or machine tool (10).

9. Use of a method according to one of claims 1 to 5 for generating a processing program for a production and/or machine tool (10) for processing a workpiece (30) with the aim of producing a target edge on the workpiece (30) which is determined on the basis of the detected edge points (36).

## Revendications

1. Procédé pour faire fonctionner une machine (10) de production et/ou une machine-outil (10),
dans lequel, à la machine (10) de production et/ou à la machine-outil (10), on associe une caméra (32), mobile dans un espace (18) de travail de la machine (10) de production et/ou de la machine-outil (10) pour enregistrer des données d'image dans l'espace (18) de travail de la machine (10) de production et/ou de la machine-outil (10),
dans lequel, au moyen de la caméra (32), alors qu'elle se déplace dans l'espace (18) de travail de la machine (10) de production et/ou de la machine-outil (10), on enregistre, en continu, respectivement, diverses images (34) de caméra,
dans lequel on détermine, dans les images (34) de caméra enregistrées, des points (36) de bord d'une pièce (30) se trouvant dans l'espace (18) de travail de la machine (10) de production et/ou de la machine-outil (10),
dans lequel on envoie des points (36) de bord détectés à un dispositif (20) de commande de la machine (10) de production et/ou de la machine-outil (10), pour reconnaître la pièce (30) respective et/ou pour déterminer une position et/ou une orientation de la pièce (30) respective et
dans lequel on guide la caméra (32) au moyen du dispositif (20) de commande de la machine (10) de production et/ou de la machine-outil (10), le long d'une ligne de bord de la pièce (30),
dans lequel on enregistre en continu des images (34) de caméra et on détermine des points (36) de bord de la pièce (30) dans les images (34) de caméra,
dans lequel, à l'aide d'un centre (38) d'image des images (34) de caméra et d'une distance du centre (38) d'image au point ou aux points (36) de bord, on détermine une longueur d'un vecteur (46) de décalage de bord,
dans lequel on corrige automatiquement la position de la caméra (32), de manière à ce que la longueur du vecteur (46) de décalage de bord reste la même ou au moins sensiblement la même le long de la ligne de bord de la pièce (30),
dans lequel on envoie les points (36) de bord détectés ensemble avec un numéro courant de l'image (34) de caméra, ou une autre information de localisation, au dispositif (20) de commande de la machine-outil (10) et
dans lequel, sur la base des points (36) de bord transmis au dispositif (20) de commande, une reconnaissance de la pièce (30) respective et/ou la détermination de l'orientation de la pièce (30) respective a lieu.

2. Procédé suivant la revendication 1, dans lequel, dans une image (34) de caméra, a lieu une recherche de points (36) de bord en partant d'un centre (38) d'image respectif, radialement dans une pluralité de directions données à l'avance ou pouvant l'être, jusqu'au bord de l'image (34) de caméra.

3. Procédé suivant la revendication 1 ou 2, dans lequel on guide la caméra (32) au moyen du dispositif (20) de commande de la machine (10) de production et/ou de la machine-outil (10) suivant une trajectoire donnée à l'avance.

4. Procédé suivant la revendication 1, 2 ou 3, dans lequel on guide la caméra (32) au moyen du dispositif (32) de commande de la machine (10) de production et/ou de la machine-outil (10), respectivement, conformément à une direction de tendance, la direction de tendance provenant d'une analyse d'images (34) de caméra précédentes et de points (36) de bord, qui y sont détectés.

5. Procédé suivant l'une des revendications précédentes, dans lequel on pondère les points (36) de bord déterminés dans une image (34) de caméra, conformément à leur position par rapport au milieu de l'image (34) de caméra respective.

6. Programme (26) d'ordinateur ayant des moyens de code de programme, qui sont mis en mémoire sur un support de données déchiffrable par ordinateur, pour effectuer tous les stades de chacune quelconque des revendications 1 à 5, lorsque le programme (26) d'ordinateur est réalisé sur un dispositif (20) de commande d'une machine (10) de production et/ou d'une machine-outil (10).

7. Support de mémoire numérique, comprenant des signaux de commande déchiffrables électroniquement, qui programme un dispositif (20) de commande programmable d'une machine (10) de production et/ou d'une machine-outil (10), de manière à réaliser un procédé suivant l'une des revendications 1 à 5.

8. Machine (10) de production et/ou machine-outil (10), comprenant une unité (22) de traitement et une mémoire (24), dans laquelle est chargé, sous la forme d'un programme d'ordinateur suivant la revendication 6, un programme (26) de commande, qui, lorsque la machine (10) de production et/ou la machine-outil (10) est en fonctionnement, est réalisé par l'unité (22) de traitement.

9. Utilisation d'un procédé suivant l'une des revendications 1 à 5, pour produire un programme d'usinage pour une machine (10) de production et/ou une machine-outil (10) pour usiner une pièce (30) dans le but de produire sur la pièce (30) un bord de consigne déterminé sur la base des points (36) de bord détectés.
